# EUROPÄISCHE PATENTSCHRIFT

(11) **EP 2 718 155 B1**
(45) Veröffentlichungstag und Bekanntmachung des Hinweises auf die Patenterteilung: **12.08.2015**
(21) Anmeldenummer: 12729350.4
(22) Anmeldetag: 05.06.2012
(51) Int. Cl.: B60R 21/206, B60R 21/239, B60R 21/231

(54) **FAHRZEUGINSASSEN-RÜCKHALTESYSTEM MIT ADAPTIVEM KNIEGASSACK**
VEHICLE OCCUPANT RESTRAINT SYSTEM HAVING AN ADAPTIVE KNEE AIRBAG
SYSTÈME DE RETENUE DE SIÈGE DE VÉHICULE AVEC SAC GONFLABLE DE GENOUX

(30) Priorität: 08.06.2011 DE 102011105032
(43) Veröffentlichungstag der Anmeldung: 16.04.2014
(73) Patentinhaber: TRW Automotive GmbH, 73553 Alfdorf (DE)
(72) Erfinder: ABELE, Timo, 73453 Abtsgmünd (DE); FREISLER, Werner, 73540 Heubach (DE)
(74) Vertreter: Prehn, Manfred
(86) Internationale Anmeldenummer: PCT/EP2012/002377
(87) Internationale Veröffentlichungsnummer: WO 2012/167908

(56) Entgegenhaltungen:
- EP-A1- 1 279 565
- DE-A1-102004 009 013
- JP-A- 2006 076 418

## Beschreibung

Die Erfindung betrifft ein Fahrzeuginsassen-Rückhaltesystem mit einem aufblasbaren Kniegassack. Die Erfindung betrifft ferner ein Kraftfahrzeug mit einem solchen Fahrzeuginsassen-Rückhaltesystem. Die Erfindung betrifft schließlich auch ein Verfahren zum Schutz eines Fahrzeuginsassen.

Das Aufblas- und Abströmverhalten von Gassäcken wird mit Crashtest-Dummys in Aufprallversuchen getestet. Crashtest-Dummys sind dem menschlichen Körper nachgebildete, lebensgroße Puppen. Um bei den Simulationen die unterschiedlichen anatomischen Gegebenheiten realer Personen gebührend zu berücksichtigen, werden die Versuche in der Regel mit drei verschiedenen Dummys durchgeführt: Der "50-Prozent-Mann" mit einer Körpergröße von 175 cm und einem Gewicht von 78 kg soll allgemein einem "normal" großen Fahrzeuginsassen entsprechen, der "95-Prozent-Mann" mit einer Körpergröße von 188 cm und einem Gewicht von 101 kg einem großen Fahrzeuginsassen und die "5-Prozent-Frau" mit einer Körpergröße von 152 cm und einem Gewicht von 54 kg einem kleinen Fahrzeuginsassen.

Aus der DE 10 2004 009 013 A1 ist eine Seitenaufprall-Rückhaltevorrichtung zum Schutz eines auf einem Fahrzeugsitz sitzenden Insassen in einem Kraftfahrzeug mit einem Gassack bekannt, der sich an den Körperbau des Fahrzeuginsassen anpasst. Der Gassack entfaltet sich zwischen einer Seitenstruktur des Fahrzeugs und dem Fahrzeuginsassen und weist eine erste Abströmöffnung auf, die in einem dem Fahrzeuginsassen zugewandten Bereich des Gassacks angeordnet ist. Die vertikale Position der Abströmöffnung ist so gewählt, dass sie vom Oberkörper eines kleinen Fahrzeuginsassen nicht, wohl aber von einem großen Fahrzeuginsassen abgedeckt wird. Somit ergibt sich für einen kleinen Fahrzeuginsassen ein geringerer Innendruck im Gassack als für einen großen Fahrzeuginsassen.

In der EP 1 279 565 A1 ist eine gattungsgemäße Insassenschutzeinrichtung mit einem Kniegassack gezeigt, bei dem ein Entlüftungsloch in einem oberen Endabschnitt vorgesehen ist. Das Entlüftungsloch interagiert mit einem über dem Kniegassack angeordneten Beifahrergassack. Wenn die Beine des Fahrzeuginsassen auf den entfalteten Kniegassack treffen und das Entlüftungsloch anfangs noch nicht durch den Beifahrergassack abgedeckt ist, kann Gas aus dem Entlüftungsloch abströmen. Dadurch wird der auf den Fahrzeuginsassen ausgeübte Aufprall gedämpft. Sobald jedoch der entfaltete Beifahrergassack das Entlüftungsloch bedeckt, wird die Gasabfuhr aus dem Entlüftungsloch begrenzt, so dass ein Mindestinnendruck des Kniegassacks für eine längere Zeitdauer erhalten bleibt.

Aufgabe der Erfindung ist es, eine Anpassung der Schutzwirkung eines aufgeblasenen Kniegassacks an den Körperbau eines Fahrzeuginsassen zu ermöglichen.

Gelöst wird diese Aufgabe durch ein Fahrzeuginsassen-Rückhaltesystem mit den Merkmalen des Anspruchs 1, und 17. Vorteilhafte und zweckmäßige Ausgestaltungen des erfindungsgemäßen Fahrzeuginsassen-Rückhaltesystems sind in den zugehörigen Unteransprüchen angegeben.

Das erfindungsgemäße Fahrzeuginsassen-Rückhaltesystem umfasst einen aufblasbaren Kniegassack, der einen Gassackmantel und wenigstens eine darin gebildete Abströmöffnung aufweist. Die Abströmöffnung ist in der oberen Hälfte des Kniegassacks angeordnet. Gemäß der Erfindung befindet sich die Abströmöffnung auf einer vom Fahrzeuginsassen abgewandten Seite des Kniegassacks, die in der Gebrauchsstellung des Kniegassacks einem festen Bauteil im Fahrzeuginnenraum unmittelbar gegenüberliegt.

Die Erfindung beruht auf der Erkenntnis, dass durch eine Anpassung des Kniegassackinnendrucks an die physische Konstitution des jeweiligen Fahrzeuginsassen eine verbesserte Schutzwirkung erreicht werden kann. Im Vergleich zu aufwändigen "aktiven" Lösungen, die z. B. eine elektronische Insassenqualifizierung und einen mehrstufigen Gasgenerator benötigen, ist die erfindungsgemäße passiv" Lösung deutlich kostengünstiger realisierbar.

Die wesentliche Voraussetzung für die Anpassung des Innendrucks im Kniegassack an den Körperbau des jeweiligen Fahrzeuginsassen ist die besondere Anordnung der Abströmöffnung auf der vom Fahrzeuginsassen abgewandten Seite unmittelbar gegenüber einem festen Bauteil im Fahrzeuginnenraum, insbesondere dem unteren Teil der Instrumententafel des Fahrzeugs. Dadurch ist es möglich, das Schließen bzw. das Freigeben der Abströmöffnung automatisch durch die Interaktion des Fahrzeuginsassen mit dem Kniegassack zu steuern: Die Abströmöffnung wird geschlossen, wenn der entsprechende Abschnitt des Gassacks, in dem die Abströmöffnung gebildet ist, durch die Knie des sich vorverlagernden Fahrzeuginsassen gegen das Bauteil gedrückt wird. Die Abströmöffnung bleibt hingegen frei, wenn der Abschnitt mit der Abströmöffnung nicht gegen das Bauteil gedrückt wird.

Somit kann unabhängig von der Konstitution des Fahrzeuginsassen immer die gleiche Menge Gas zum Aufblasen des in den Kniegassacks eingesetzt werden, da sich der Innendruck automatisch anpassen kann. Eine Insassenqualifizierung oder ein mehrstufiger Gasgenerator sind für die erfindungsgemäße Lösung nicht erforderlich.

Insbesondere ist der Kniegassack in seiner Gebrauchsstellung (d. h. im vollständig aufgeblasenen Zustand) so angeordnet, dass derjenige vertikale Abschnitt des Gassacks, in dem die Abströmöffnung gebildet ist, dem Knie eines Fahrzeuginsassen normaler Größe gegenüber liegt. Dadurch ist gewährleistet, dass im Falle eines normal großen Fahrzeuginsassen die Abströmöffnung gegen das Bauteil im Fahrzeuginnenraum gedrückt und damit geschlossen wird, sodass der maximale Innendruck dauerhaft für eine Rückhaltung des Fahrzeuginsassen zur Verfügung steht.

Dementsprechend sollte der Kniegassack in seiner Gebrauchsstellung auch so angeordnet sein, dass derjenige vertikale Abschnitt des Gassacks, in dem die Abströmöffnung gebildet ist, dem Knie eines Fahrzeuginsassen kleiner Größe nicht gegenüber liegt. Damit ist sichergestellt, dass im Falle eines kleinen Fahrzeuginsassen dessen Knie die Abströmöffnung nicht verschließen und Gas aus dem Kniegassack abströmen kann. Der Innendruck wird reduziert, und ein besser gedämpftes Rückhalteverhalten wird ermöglicht.

Die Erfindung geht in diesem Zusammenhang davon aus, dass die verschiedenen Fahrzeuginsassen (groß, normal groß, klein) anhand der vertikalen Knieposition mit ausreichender Zuverlässigkeit unterschieden werden können. Die Knieposition bezieht sich dabei auf die bei Crashtests übliche Sitzposition entsprechender Dummys.

Aufgrund der anatomischen Unterschiede und der dadurch bedingten Variation der Kniehöhe der Fahrzeuginsassen ist es am günstigsten, wenn bei einem Kniegassack, der in seiner Gebrauchsstellung, insbesondere ;durch Fangbänder im Inneren des Kniegassacks, in mehrere vertikale Abschnitte unterteilt ist, die Abströmöffnung in einem oberen, vorzugsweise im obersten Abschnitt gebildet ist.

Bei einem Kniegassack eines erfindungsgemäßen Fahrzeuginsassen-Rückhaltesystems, der für große, normal große und kleine Fahrzeuginsassen ausgelegt ist, erweist sich eine Abströmöffnung mit einem Durchmesser zwischen 20 mm und 40 mm als ideal.

Einem aufwändigeren Ansatz er Erfindung folgend sind bei einer besonderen Ausführungsform mehrere vertikal übereinander angeordnete Abströmöffnungen vorgesehen. Eine solche Anordnung eröffnet die Möglichkeit, den Innendruck des Gassacks genauer an die tatsächliche Konstitution des Fahrzeuginsassen anzupassen. So wird ein normal großer Insasse mehr Abströmöffnungen gegen das gegenüberliegende feste Bauteil drücken und damit verschließen als ein etwas kleinerer Insasse. Je nach Anzahl und Abstand der Abströmöffnungen sind verschiedene Abstufungen möglich.

Für die Erfüllung der grundlegenden Funktionalität des erfindungsgemäßen Kniegassacks ist bei der vorgenannten Ausführungsform vorgesehen, dass zumindest ein Großteil der Abströmöffnungen zwischen den Knieauftreffstellen eines normal großen Fahrzeuginsassen, jedoch oberhalb der Knieauftreffstellen eines kleinen Fahrzeuginsassen angeordnet ist.

Vorzugsweise weisen die übereinander angeordneten Abströmöffnungen im Vergleich zu ihrer vertikalen Höhe eine größere horizontale Breite auf. Mit einer solchen kiemenartigen Struktur lässt sich eine Vielzahl von Abströmöffnungen auf engem Raum (in vertikaler Richtung) realisieren, sodass eine feinere Abstimmung des Gassackinnendrucks erreicht werden kann.

Bei der Ausführungsform mit den übereinander angeordneten Abströmöffnungen ergeben sich eine bevorzugte Einstellungen des Gassackinnendrucks in Abhängigkeit vom Körperbau des Fahrzeuginsassen durch eine vertikal zentrierte Anordnung der Abströmöffnungen und/oder dadurch, dass die Breite der Abströmöffnungen mit zunehmender Höhe abnimmt.

Um das aus dem Kniegassack abströmende Gas vom Fahrzeuginsassen wegzuleiten, kann auf der Außenseite des Kniegassacks ein von der Abströmöffnung ausgehender Abströmkanal vorgesehen sein. Der Abströmkanal sorgt dafür, dass das im Kniegassack befindliche, möglicherweise heiße und mit Partikeln versetzte Gas nicht auf den Fahrzeuginsassen trifft.

Gemäß der bevorzugten Ausführungsform des Abströmkanals ist der Abströmkanal durch eine Abdeckung gebildet, die nicht vollständig umlaufend um die Abströmöffnung am Gassackmantel befestigt ist und unter dem Druck des abströmenden Gases ausbauchen kann. Dies erlaubt zum Einen eine platzsparende Ausführung, da die Abdeckung im gefalteten Gassackpaket kaum zusätzlichen Platz beansprucht. Zum anderen sorgt das Ausbauchen dafür, dass der Abströmkanal eine vorbestimmte Größe erreichen und halten kann, auch wenn der aufgeblasene Gassack (ohne den von einem sich vorverlagernden Fahrzeuginsassen ausgeübten Druck) eng an der Instrumententafel anliegt.

Gemäß einer bevorzugten Gestaltung des Abströmkanals beträgt dessen Länge mindestens das 1,5-fache des Durchmessers der Abströmöffnung, gemessen von deren Mittelpunkt.

Um den Fahrzeuginsassen vor dem aus dem Kniegassack entweichenden Gas zu schützen, sollte der Abströmkanal nicht auf den Insassen gerichtet sein, sondern er sollte z. B. zu einer Seite, vorzugsweise in Richtung einer Fahrzeugseitenstruktur verlaufen.

Alternativ kann der Abströmkanal aber auch im Wesentlichen nach oben oder unten verlaufen.

Für den letztgenannten Fall (Verlauf des Abströmkanals nach oben) ist eine Ausführungsform besonders vorteilhaft, bei der die Abdeckung einen mittigen, nach unten weisenden Fortsatz aufweist, der nicht am Gassackmantel befestigt ist. Von einem Fahrzeuginsassen, dessen Größe bzw. Gewicht zwischen dem eines normal großen und eines kleinen Fahrzeuginsassen liegt, wird nur dieser Fortsatz gegen das feste Bauteil gedrückt. Dadurch wird der Querschnitt des Abströmkanals reduziert, jedoch nicht auf Null. Insbesondere bildet sich in diesem Fall durch die mittige Anordnung des Fortsatzes ein zweigeteilter Abströmkanal, wobei die Teilkanäle jeweils schräg nach unten weisen.

In Abstimmung auf diesen Verlauf der Teilkanäle weist die Abströmöffnung vorzugsweise eine oder mehrere Ausbuchtungen auf, die sich ebenfalls schräg nach unten erstrecken.

Die Aufgabe der Erfindung wird auch durch ein Verfahren zum Schutz eines Fahrzeuginsassen mit folgenden Schritten gelöst:
- Aufblasen eines Kniegassacks mit Gas, sodass der Kniegassack eine Gebrauchsstellung einnimmt;
- Anpassen des Gasabströmverhaltens in Abhängigkeit von der Konstitution, insbesondere der Größe des Fahrzeuginsassen, indem eine in einem oberen Abschnitt des Kniegassacks gebildete Abströmöffnung
   a) vom Knie eines sich vorverlagernden Fahrzeuginsassen normaler Größe gegen ein festes Bauteil im Fahrzeuginnenraum gedrückt und dadurch geschlossen wird, bzw.
   b) vom Knie eines sich vorverlagernden Fahrzeuginsassen kleiner Größe nicht gegen ein festes Bauteil im Fahrzeuginnenraum gedrückt wird.

Auch hier wird von einer Sitzposition ausgegangen, die entsprechende Crashtest-Dummys bei Aufprallversuchen üblicherweise einnehmen.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine Draufsicht auf einen ausgebreiteten Kniegassack für ein erfindungsgemäßes Fahrzeuginsassen-Rückhaltesystem nach einer ersten Ausführungsform;
- Figur 2 eine perspektivische Ansicht eines Ausschnitts des Kniegassacks aus Figur 1 im aufgeblasenen Zustand;
- Figur 3 eine Interaktion eines normal großen Fahrzeuginsassen mit dem aufgeblasenen Kniegassack aus Figur 1 in einem Fahrzeug;
- Figur 4 eine Interaktion eines kleinen Fahrzeuginsassen mit dem aufgeblasenen Kniegassack aus Figur 1 in einem Fahrzeug;
- Figur 5 eine Draufsicht auf einen ausgebreiteten Kniegassack für ein erfindungsgemäßes Fahrzeuginsassen-Rückhaltesystem nach einer zweiten Ausführungsform;
- Figur 6 eine Draufsicht auf einen ausgebreiteten Kniegassack für ein erfindungsgemäßes Fahrzeuginsassen-Rückhaltesystem nach einer dritten Ausführungsform.

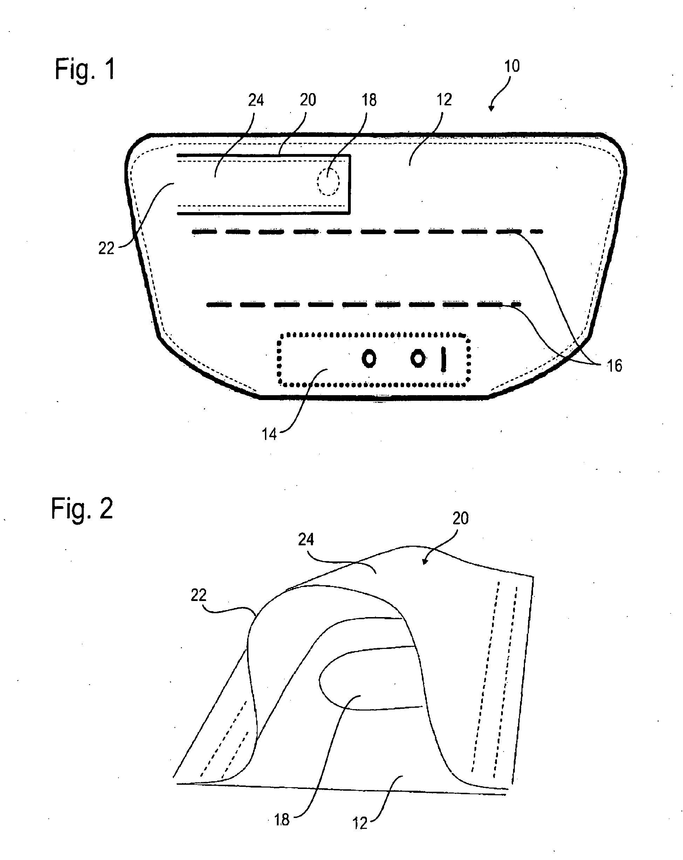

In Figur 1 ist ein Kniegassack 10 für ein Fahrzeuginsassen-Rückhaltesystem nach einer ersten Ausführungsform mit einem Gassackmantel 12 dargestellt, der einen Anbindungsbereich 14 für einen Gasgenerator und Anbindungsstellen 16 für ein oder mehrere Fangbänder aufweist. Außerdem weist der Gassackmantel 12 eine Abströmöffnung 18 auf, die im Wesentlichen kreisförmig ist und vorzugsweise einen Durchmesser zwischen 20 und 40 mm hat.

Die Abströmöffnung 18 ist von einer Abdeckung 20 in Form einer flexiblen Gewebelage oder einem anderen nicht formstabilen Material bedeckt, die mit Ausnahme eines Abströmabschnitts 22 rund um die Abströmöffnung 18 am Gassackmantel 12 befestigt ist. Die Abdeckung 20 ist so befestigt, dass ein über der Abströmöffnung 18 liegender Kanalabschnitt 24 der Abdeckung 20 ausbauchen kann. Somit kann dieser Kanalabschnitt 24 zusammen mit dem darunter liegenden Teil des Gassackmantels 12 im aufgeblasenen Zustand des Kniegassacks 10 einen Abströmkanal für das im Inneren des Kniegassacks 10 befindliche Gas definieren, wie in Figur 2 gezeigt. Die Abdeckung 20 kann hierfür auch aus einem dehnbaren Material gebildet sein. Die Länge des Abströmkanals beträgt mindestens das 1,5-fache des Durchmessers der Abströmöffnung 18, gemessen von deren Mittelpunkt.

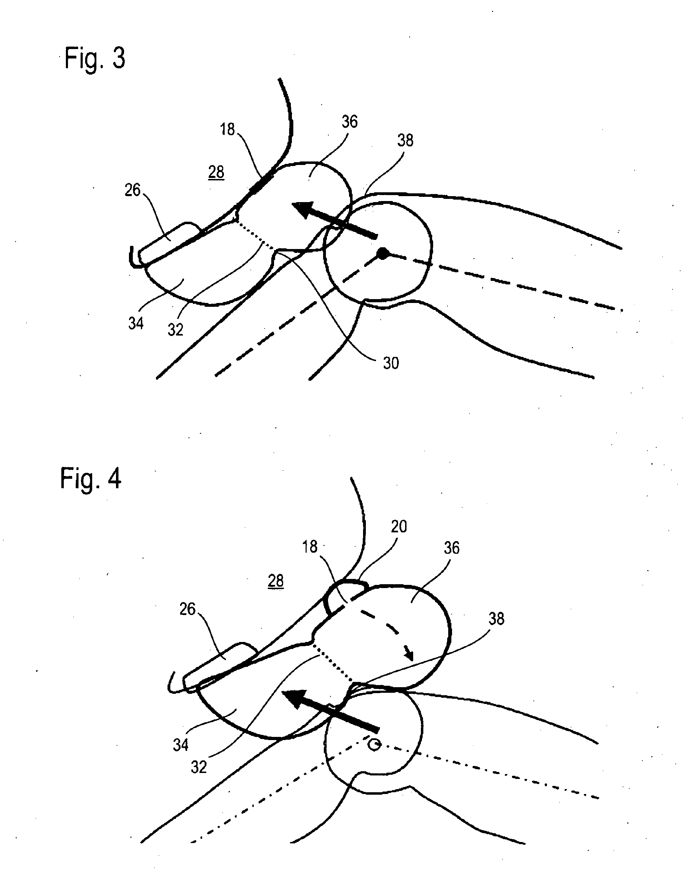

Aus den Figuren 3 und 4 geht hervor, dass der Kniegassack 10 in einer Aufnahme 26 hinter dem unteren Teil der Instrumententafel 28 des Fahrzeugs so eingebaut ist, dass er sich im Rückhaltefall beim Aufblasen durch den Gasgenerator aus einer Öffnung in der Instrumententafel 28 heraus entfaltet. In der dargestellten Gebrauchsstellung nimmt der Kniegassack 10 eine Orientierung ein, die im Wesentlichen der Orientierung des in Figur 1 gezeigten ausgebreiteten, jedoch nicht aufgeblasenen Kniegassacks 10 entspricht.

Das bedeutet, dass im aufgeblasenen Zustand des Kniegassacks 10 der Abströmkanal ausgehend von der Abströmöffnung 18 horizontal in Richtung einer Fahrzeugseitenstruktur verläuft. Auch im eingebauten, nicht entfalteten Zustand des Kniegassacks 10 verläuft der Abströmkanal in dieser Richtung. In anderen Ausführungsformen sind aber auch um bis zu 30° oder sogar bis zu 45° von der Horizontalen abweichende Verläufe möglich.

Außerdem geht aus den Figuren 3 und 4 hervor, dass die Abströmöffnung 18 in der oberen Hälfte des Kniegassacks 10 gebildet ist. Beim dargestellten Ausführungsbeispiel ist der Kniegassack 10 durch eine Einschnürung 30, die durch die Anordnung und Länge eines oder mehrerer innenliegender Fangbänder 32 bedingt ist, in einen der Aufnahme 26 näheren unteren Abschnitt 34 und einen oberen Abschnitt 36 unterteilt, in dem sich die Abströmöffnung 18 befindet. Wenn der Kniegassack 10 mehrere vertikale Abschnitte aufweist, ist die Abströmöffnung 18 vorzugsweise im obersten dieser Abschnitte gebildet. In jedem Fall ist die Abströmöffnung 18 auf der vom Fahrzeuginsassen abgewandten Seite des Kniegassacks 10 gebildet und liegt damit der Instrumententafel 28 unmittelbar gegenüber.

Die Anordnung des Kniegassacks 10 mit der Abströmöffnung 18 ist so gewählt, dass ein normal großer Fahrzeuginsasse, der in Aufprallversuchen durch einen "50-Prozent-Mann" simuliert werden kann, bei seiner Vorverlagerung mit seinem Knie 38 so auf den aufgeblasenen Kniegassack 10 auftrifft, dass der obere Abschnitt 34 des Kniegassacks 10, und insbesondere die darin gebildete Abströmöffnung 18, gegen die Instrumententafel 28 gedrückt wird. In diesem geschlossenen Zustand der Abströmöffnung 18, der in Figur 3 dargestellt ist, kann kein oder nur sehr wenig Gas durch die Abströmöffnung 18 aus dem Kniegassack 10 entweichen, sodass der Kniegassack 10 einen hohen Innendruck halten und damit eine für den normal großen Fahrzeuginsassen ausreichende Schutzfunktion ausüben kann.

Ermöglicht wird das absichtliche Unterdrücken des Gasabströmens dadurch, dass der obere Gassackabschnitt 36 mit der Abströmöffnung 18 dem Knie 38 des normal großen Fahrzeuginsassen gegenüberliegt. Ein ähnliches Verhalten zeigt der Kniegassack 10 im Falle eines großen Fahrzeuginsassen.

Anders verhält sich der Kniegassack 10 dagegen bei einem kleinen Fahrzeuginsassen, der durch eine "5-Prozent-Frau" simuliert werden kann. Wie in Figur 4 zu sehen ist, trifft der kleine Fahrzeuginsasse mit dem Knie 38 größtenteils auf den unteren Abschnitt 34 des Kniegassacks 10. Der Kniegassack 10 ist so ausgelegt, dass in diesem Fall die Abströmöffnung 18 von der Instrumententafel 28 beabstandet ist, sodass Gas durch die Abströmöffnung 18 aus dem Kniegassack 10 entweichen kann. Unterstützt wird dieses Verhalten des Kniegassacks 10 dadurch, dass sich die Abdeckung 20, die durch das durch die Abströmöffnung 18 austretende Gas ausbaucht, an der Instrumententafel 28 abstützen kann und so die Abströmöffnung 18 auf Distanz zur Instrumententafel 28 hält.

Auf diese Weise wird der Aufprall der Knie 38 des kleinen Fahrzeuginsassen auf den voll aufgeblasenen Kniegassack 10 gedämpft. Die in den Kniegassack 10 einströmende Gasmenge sowie die Abströmöffnung 18 und der Abstromkanal sind jedoch so bemessen, dass ein für einen kleinen Fahrzeuginsassen ausreichender Gassackinnendruck gewährleistet ist. Der Abströmkanal lenkt das abströmende Gas zur Seite in einen Bereich, der für den Fahrzeuginsassen unkritisch ist.

Die Auslegung und die Anordnung des Kniegassacks 10 orientieren sich an den Kniepositionen der jeweiligen Crashtest-Dummys (50-Prozent-Mann, 95-Prozent-Mann bzw. 5-Prozent-Frau), wie sie durch die bei den Aufprallversuchen allgemein übliche Sitzposition der Dummys vorgegeben sind (keine sogenannten OOP-Positionen).

Es sind auch Ausführungsformen möglich, bei denen die Abströmöffnung 18 nicht der Instrumententafel 28, sondern einem anderen festen Bauteil im Fahrzeuginnenraum gegenüberliegt. Wichtig ist, dass die Abströmöffnung 18 von einem sich vorverlagernden normal großen Fahrzeuginsassen so gegen dieses Bauteil gedrückt werden kann, dass dadurch das Abströmen von Gas behindert wird.

Selbstverständlich können auch mehrere solche Abströmöffnungen 18 und zugehörige Abströmkanäle vorgesehen sein.

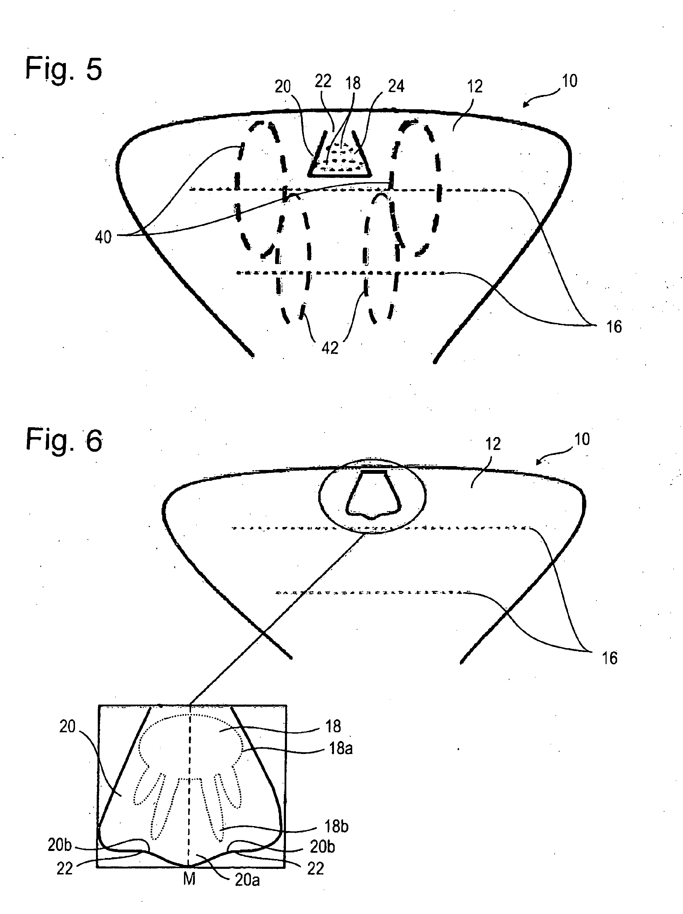

In Figur 5 ist ein Kniegassack 10 für ein Fahrzeuginsassen-Rückhaltesystem nach einer zweiten Ausführungsform dargestellt. Wie in Figur 1 ist der Gassack 10 auch hier aus der entgegengesetzten Sicht des Fahrzeuginsassen gezeigt. Im Unterschied zur ersten Ausführungsform sind hier mehrere Abströmöffnungen 18 vorgesehen. Die Abströmöffnungen 18 befinden sich wie bei der ersten Ausführungsform auf der vom Fahrzeuginsassen abgewandten Seite des Kniegassacks 10, d. h. sie liegen der Instrumententafel 28 oder einem anderen festen Bauteil unmittelbar gegenüber. Die Abströmöffnungen 18 sind auch alle in der oberen Hälfte des Kniegassacks 10 angeordnet, genauer gesagt im oberen Drittel.

Die Abströmöffnungen 18 sind in kleinen Abständeb übereinander angeordnet und weisen im Vergleich zu ihrer vertikalen Höhe eine deutlich größere horizontale Breite auf. Insbesondere können die Abströmöffnungen 18 eine ovale oder schlitzartige Form haben. Die Abströmöffnungen 18 sind vertikal zentriert angeordnet, wobei die Breite der Abströmöffnungen 18 mit zunehmender Höhe abnimmt.

Die Abströmöffnungen 18 sind von einer aus einer flexiblen Gewebelage oder einem anderen nicht formstabilen Material gebildeten Abdeckung 20 bedeckt. Wie bei der ersten Ausführungsform ist die Abdeckung 20 mit Ausnahme eines Abströmabschnitts 22 rund um die Abströmöffnungen 18 am Gassackmantel 12 so befestigt, dass ein über den Abströmöffnungen 18 liegender Kanalabschnitt 24 der Abdeckung 20 ausbauchen und damit einen Abströmkanal definieren kann. Die Abdeckung 20 ist aber so angeordnet, dass der Abströmabschnitt 22 nach oben weist, d. h. der Abströmkanal verläuft vertikal nach oben.

In Figur 5 sind auch die Knieauftreffstellen 40 für einen Fahrzeuginsassen normaler Größe und die tiefer liegenden Knieauftreffstellen 42 für einen Fahrzeuginsassen kleiner Größe angedeutet. Im Falle eines normal großen Fahrzeuginsassen liegen praktisch alle oder zumindest ein Großteil der Abströmöffnungen 18 zwischen den Knieauftreffstellen 40 (auf der gegenüberliegenden Seite des Kniegassacks 10), wogegen im Falle eines kleinen Fahrzeuginsassen praktisch alle oder zumindest ein Großteil der Abströmöffnungen 18 oberhalb der Knieauftreffstellen 42 liegen.

Wenn ein normal großer Fahrzeuginsasse bei einer Vorverlagerung mit seinen Knien 38 auf den aufgeblasenen Kniegassack 10 auftrifft und den oberen Abschnitt 34 des Kniegassacks 10 mit den Abströmöffnungen 18 gegen die Instrumententafel 28 drückt (vgl. Figur 3), werden dadurch alle oder zumindest ein Großteil der Abströmöffnungen 18 geschlossen. Bei einem kleinen Fahrzeuginsassen stehen dagegen alle oder zumindest ein Großteil der Abströmöffnungen 18 zur Verfügung, da die Abströmöffnungen 18 von der Instrumententafel 28 beabstandet sind (vgl. Figur 4). Ein Teil des Gases kann in diesem Fall durch den Abströmkanal nach oben abströmen.

Für Fahrzeuginsassen, deren Größe und/oder Gewicht sich zwischen dem eines 5-Prozent-Dummys und eines 50-Prozent-Dummys bewegt, werden entsprechend mehr oder weniger Abströmöffnungen 18 freigegeben bzw. blockiert. Somit passt sich der Innendruck des Kniegassacks 10 individuell an die Konstitution des jeweiligen Fahrzeuginsassen an.

Figur 6 zeigt einen Kniegassack 10 für ein Fahrzeuginsassen-Rückhaltesystem nach einer dritten Ausführungsform. Hier ist eine einzelne Abströmöffnung 18 vorgesehen, die im gleichen Bereich des Kniegassacks 10 angeordnet ist wie die Abströmöffnungen 18 der zweiten Ausführungsform. Die Abströmöffnung 18 ist auch von einer Abdeckung 20 bedeckt.

Wie das vergrößerte Detail in Figur 6 erkennen lässt hat die Abströmöffnung 18 hier eine besondere Form. Ausgehend von einer ovalen Grundform 18a erstrecken sich zu beiden Seiten einer Mittellinie M mehrere Ausbuchtungen 18b schräg nach unten, und zwar weg von der Mittellinie M.

Die Abdeckung 20 begrenzt wiederum einen Abströmkanal, der hier jedoch nach unten, also in Richtung des Fußraums des Fahrzeugs weist. Außerdem ist die Abdeckung 20 so geformt, dass sie in der Mitte (bezogen auf die Mittellinie M) einen Fortsatz 20a und optional zu beiden Seiten der Mittellinie M Einbuchtungen 20b aufweist.

Wie bei den vorigen Ausführungsformen wird ein normal großer Fahrzeuginsasse den Kniegassack 10 mit seinen Knien 38 so gegen die Instrumententafel drücken, dass die Abströmöffnung 18 durch die Abdeckung 20 geschlossen wird. Bei einem kleinen Insassen hingegen, dessen Knie 38 größtenteils nicht auf den unteren Abschnitt 34 des Kniegassacks 10 treffen, wird die Abströmöffnung 18 nicht zugedrückt.

Auch bei einem etwas größeren Fahrzeuginsassen (Größe/Gewicht zwischen 5-Prozent- und 50-Prozent-Dummy) kann Gas aus dem Kniegassack 10 entweichen, da in diesem Fall nur der Fortsatz 20a der Abdeckung 20 gegen den Gassackmantel 12 gedrückt wird. Der Abströmkanal teilt sich dadurch in zwei kleinere Teilkanäle zu beiden Seiten der Mittellinie M auf. Die Ausbuchtungen 18b der Abströmöffnung 18 sind entsprechend auf die Abdeckung 20 mit deren Fortsatz 20a und gegebenenfalls deren Einbuchtungen 20b abgestimmt.

Falls es zu einem Entweichen von Gas durch die Abströmöffnung 18 kommt, strömt das Gas im Wesentlichen nach unten ab, wobei die Hauptabströmrichtung(en) durch die insassenabhängige Form des Abströmkanals (ein großer nach unten gerichteter Kanal oder zwei kleinere schräge Teilkanäle) vorgegeben wird bzw. werden.

Selbstverständlich können die oben beschriebenen Ausführungsformen, oder bestimmte Merkmale der einzelnen Ausführungsformen, in geeigneter Weise miteinander kombiniert werden.

### Bezugszeichenliste

- 10: Kniegassack
- 12: Gassackmantel
- 14: Anbindungsbereich
- 16: Anbindungsstellen
- 18: Abströmöffnung
- 18a: Grundform
- 18b: Ausbuchtungen
- 20: Abdeckung
- 20a: Fortsatz
- 20b: Einbuchtungen
- 22: Abströmabschnitt
- 24: Kanalabschnitt
- 26: Aufnahme
- 28: Instrumententafel
- 30: Einschnürung
- 32: Fangband
- 34: unterer Gassackabschnitt
- 36: oberer Gassackabschnitt
- 38: Knie
- 40: Knieauftreffstellen (normaler Fahrzeuginsasse)
- 42: Knieauftreffstellen (kleiner Fahrzeuginsasse)

## Patentansprüche

1. Fahrzeuginsassen-Rückhaltesystem, mit einem aufblasbaren Kniegassack (10), wobei der Kniegassack (10) einen Gassackmantel (12) und wenigstens eine darin gebildete Abströmöffnung (18) aufweist, die in der oberen Hälfte des Kniegassacks (10) angeordnet ist,
**dadurch gekennzeichnet, dass** sich die Abströmöffnung (18) auf einer vom Fahrzeuginsassen abgewandten Seite des Kniegassacks (10) befindet, die in der Gebrauchsstellung des Kniegassacks (10) einem festen Bauteil (28) im Fahrzeuginnenraum unmittelbar gegenüberliegt.

2. Fahrzeuginsassen-Rückhaltesystem nach Anspruch 1, **dadurch gekennzeichnet, dass** der Kniegassack (10) in seiner Gebrauchsstellung so angeordnet ist, dass derjenige vertikale Abschnitt (36) des Kniegassacks (10), in dem die Abströmöffnung (18) gebildet ist, dem Knie (38) eines Fahrzeuginsassen normaler Größe gegenüber liegt.

3. Fahrzeuginsassen-Rückhaltesystem nach Anspruch 1 oder 2, **dadurch gekennzeichnet, dass** der Kniegassack (10) in seiner Gebrauchsstellung so angeordnet ist, dass derjenige vertikale Abschnitt (36) des Kniegassacks (10), in dem die Abströmöffnung (18) gebildet ist, dem Knie (38) eines Fahrzeuginsassen kleiner Größe nicht gegenüber liegt.

4. Fahrzeuginsassen-Rückhaltesystem nach einem der vorhergehenden Ansprüche, **dadurch gekennzeichnet, dass** der Kniegassack (10) in seiner Gebrauchsstellung, insbesondere durch Fangbänder (32) im Inneren des Kniegassacks (10), in mehrere vertikale Abschnitte (34, 36) unterteilt ist und die Abströmöffnung (18) in einem oberen, vorzugsweise im obersten Abschnitt (36) gebildet ist.

5. Fahrzeuginsassen-Rückhaltesystem nach einem der vorhergehenden Ansprüche, **dadurch gekennzeichnet, dass** die Abströmöffnung (18) einen Durchmesser zwischen 20 und 40 mm hat.

6. Fahrzeuginsassen-Rückhaltesystem nach einem der Ansprüche 1 bis 4, **dadurch gekennzeichnet, dass** mehrere vertikal übereinander angeordnete Abströmöffnungen (18) vorgesehen sind, die vorzugsweise im Vergleich zu ihrer vertikalen Höhe eine größere horizontale Breite aufweisen.

7. Fahrzeuginsassen-Rückhaltesystem nach Anspruch 6, **dadurch gekennzeichnet, dass** zumindest ein Großteil der Abströmöffnungen (18) zwischen den Knieauftreffstellen (40) eines normal großen Fahrzeuginsassen, jedoch oberhalb der Knieauftreffstellen (42) eines kleinen Fahrzeuginsassen angeordnet ist.

8. Fahrzeuginsassen-Rückhaltesystem nach Anspruch 6 oder 7, **dadurch gekennzeichnet, dass** die Abströmöffnungen (18) vertikal zentriert angeordnet sind und/oder die Breite der Abströmöffnungen (18) mit zunehmender Höhe abnimmt.

9. Fahrzeuginsassen-Rückhaltesystem nach einem der vorhergehenden Ansprüche, **dadurch gekennzeichnet, dass** auf der Außenseite des Kniegassacks (10) ein von der Abströmöffnung (18) ausgehender Abströmkanal für im Kniegassack (10) befindliches Gas vorgesehen ist.

10. Fahrzeuginsassen-Rückhaltesystem nach Anspruch 9, **dadurch gekennzeichnet, dass** der Abströmkanal durch eine Abdeckung (20) gebildet ist, die nicht vollständig umlaufend um die Abströmöffnung (18) am Gassackmantel (12) befestigt ist und unter dem Druck des abströmenden Gases ausbauchen kann.

11. Fahrzeuginsassen-Rückhaltesystem nach einem der Ansprüche 1 bis 5 und Anspruch 9 oder 10, **dadurch gekennzeichnet, dass** die Länge des Abströmkanals mindestens das 1,5-fache des Durchmessers der Abströmöffnung (18) beträgt, gemessen von deren Mittelpunkt.

12. Fahrzeuginsassen-Rückhaltesystem nach einem der Ansprüche 9 bis 11, **dadurch gekennzeichnet, dass** der Abströmkanal zu einer Seite, vorzugsweise in Richtung einer Fahrzeugseitenstruktur verläuft.

13. Fahrzeuginsassen-Rückhaltesystem nach einem der Ansprüche 9 bis 11, **dadurch gekennzeichnet, dass** der Abströmkanal im Wesentlichen nach oben verläuft.

14. Fahrzeuginsassen-Rückhaltesystem nach einem der Ansprüche 9 bis 11, **dadurch gekennzeichnet, dass** der Abströmkanal im Wesentlichen nach unten verläuft.

15. Fahrzeuginsassen-Rückhaltesystem nach Anspruch 10 und Anspruch 14, **dadurch gekennzeichnet, dass** die Abdeckung (20) einen mittigen, nach unten weisenden Fortsatz (20a) aufweist, der nicht am Gassackmantel (12) befestigt ist.

16. Fahrzeuginsassen-Rückhaltesystem nach Anspruch 15, **dadurch gekennzeichnet, dass** die Abströmöffnung (18) eine oder mehrere Ausbuchtungen (18b) aufweist, die sich schräg nach unten erstrecken.

17. Verfahren zum Schutz eines Fahrzeuginsassen, mit folgenden Schritten:
- Aufblasen eines Kniegassacks (10) mit Gas, sodass der Kniegassack (10) eine Gebrauchsstellung einnimmt;
- Anpassen des Gasabströmverhaltens in Abhängigkeit von der Konstitution, insbesondere der Größe des Fahrzeuginsassen, indem eine in einem oberen Abschnitt (36) des Kniegassacks (10) gebildete Abströmöffnung (18)
a) vom Knie (38) eines sich vorverlagernden Fahrzeuginsassen normaler Größe gegen ein festes Bauteil (28) im Fahrzeuginnenraum gedrückt und dadurch geschlossen wird, bzw.
b) vom Knie (38) eines sich vorverlagernden Fahrzeuginsassen kleiner Größe nicht gegen ein festes Bauteil (28) im Fahrzeuginnenraum gedrückt wird.

## Claims

1. A vehicle occupant restraint system comprising an inflatable knee airbag (10), wherein the knee airbag (10) includes an airbag sheath (12) and at least one discharge orifice (18) formed therein which is arranged in the upper half of the knee airbag (10),
**characterized in that** the discharge orifice (18) is provided on a side of the knee airbag (10) facing away from the vehicle occupant which in the position of use of the knee airbag (10) is directly opposed to a fixed component (28) in the vehicle interior.

2. The vehicle occupant restraint system according to claim 1, **characterized in that** the knee airbag (10) in its position of use is arranged so that the vertical portion (36) of the knee airbag (10) in which the discharge orifice (18) is formed is opposed to the knee (38) of a vehicle occupant of normal height.

3. The vehicle occupant restraint system according to claim 1 or 2, **characterized in that** the knee airbag (10) in its position of use is arranged so the vertical portion (36) of the knee airbag (10) in which the discharge orifice (18) is formed is not opposed to the knee of a vehicle occupant of small height.

4. The vehicle occupant restraint system according to any one of the preceding claims, **characterized in that** in its position of use the knee airbag (10) is subdivided into plural vertical portions (34, 36) especially by tethers (32) inside the knee airbag (10), and the discharge orifice (18) is formed in an upper, preferably in the uppermost portion (36).

5. The vehicle occupant restraint system according to any one of the preceding claims, **characterized in that** the discharge orifice (18) has a diameter of from 20 to 40 mm.

6. The vehicle occupant restraint system according to any one of the claims 1 to 4, **characterized in that** plural vertically superimposed discharge orifices (18) are provided which preferably have a larger horizontal width compared to their vertical height.

7. The vehicle occupant restraint system according to claim 6, **characterized in that** at least a major part of the discharge orifices (18) is arranged between the knee impact points (40) of a vehicle occupant of normal height, but above the knee impact points (42) of a small vehicle occupant.

8. The vehicle occupant restraint system according to claim 6 or 7, **characterized in that** the discharge orifices (18) are arranged to be vertically centered and/or the width of the discharge orifices (18) decreases with increasing height.

9. The vehicle occupant restraint system according to any one of the preceding claims, **characterized in that** on the outside of the knee airbag (10) a discharge passage starting from the discharge orifice (18) is provided for gas present in the knee airbag (10).

10. The vehicle occupant restraint system according to claim 9, **characterized in that** the discharge passage is formed by a cover (20) which is fastened at the airbag sheath (12) to be not completely circumferential around the discharge orifice (18) and can bulge under the pressure of the discharging gas.

11. The vehicle occupant restraint system according to any one of the claims 1 to 5 and claim 9 or 10, **characterized in that** the length of the discharge passage amounts to at least 1.5 times the diameter of the discharge orifice (18), measured from the center thereof.

12. The vehicle occupant restraint system according to any one of the claims 9 to 11, **characterized in that** the discharge passage extends to one side, preferably in the direction of a vehicle side structure.

13. The vehicle occupant restraint system according to any one of the claims 9 to 11, **characterized in that** the discharge passage extends substantially upwards.

14. The vehicle occupant restraint system according to any one of the claims 9 to 11, **characterized in that** the discharge passage extends substantially downwards.

15. The vehicle occupant restraint system according to claim 10 and claim 14, **characterized in that** the cover (20) includes a central downwardly pointing extension (20a) which is not fastened to the airbag sheath (12).

16. The vehicle occupant restraint system according to claim 15, **characterized in that** the discharge orifice (18) includes one or more bulges (18b) extending diagonally downwards.

17. A method for protection of a vehicle occupant comprising the steps of:
- inflating a knee airbag (10) with gas so that the knee airbag (10) adopts a position of use;
- adapting the gas discharge behavior depending on the constitution, especially the height of the vehicle occupant in that a discharge orifice (18) formed in an upper portion (36) of the knee airbag (10)
a) is pressed against a fixed component (28) in the vehicle interior by the knee (38) of a vehicle occupant of normal height moving forward and is closed thereby, and respectively
b) is not pressed against a fixed component (28) in the vehicle interior by the knee (38) of a vehicle occupant of small height moving forward.

## Revendications

1. Système de retenue d'occupants de véhicule, comportant un airbag de genou (10), dans lequel l'airbag de genou (10) comprend une enveloppe de coussin gonflable (12) et, formé à l'intérieur, au moins un évent (18) qui est disposé dans la moitié supérieure de l'airbag de genou (10),
**caractérisé en ce que** l'évent (18) est situé opposé au côté du passager du véhicule sur une des parois de l'airbag de genou (10) qui, dans la position d'utilisation de l'airbag de genou (10) fait directement face à un élément fixe (28) à l'intérieur du véhicule.

2. Système de retenue d'occupants de véhicule selon la revendication 1, **caractérisé en ce que** l'airbag de genou (10) est, dans sa position d'utilisation, disposé de sorte que la partie verticale (36) de l'airbag de genou (10) dans laquelle est situé l'évent (18), se trouve du côté opposé au genou (38) d'un occupant de taille normale d'un véhicule.

3. Système de retenue d'occupants de véhicule selon la revendication 1 ou 2, **caractérisé en ce que** l'airbag de genou (10) est, dans sa position d'utilisation, disposé de sorte que la partie verticale (36) de l'airbag de genou (10) dans laquelle est situé l'évent (18), ne se trouve pas du côté opposé au genou (38) d'un occupant de petite taille d'un véhicule.

4. Système de retenue d'occupants de véhicule selon l'une quelconque des revendications précédentes, **caractérisé en ce que** l'airbag de genou (10) dans sa position d'utilisation, est divisé en une pluralité de parties verticales (34, 36) en particulier par des sangles de retenue (32) à l'intérieur de l'airbag de genou (10) et que l'évent (18) est réalisé dans une partie supérieure, de préférence sur la partie la plus haute (36).

5. Système de retenue d'occupants de véhicule selon l'une quelconque des revendications précédentes, **caractérisé en ce que** l'évent (18) a un diamètre compris entre 20 et 40 mm.

6. Système de retenue d'occupants de véhicule selon l'une quelconque des revendications 1 à 4, **caractérisé en ce qu'**est prévu une pluralité d'évents (18) arrangés verticalement les uns au dessus des autres, qui possèdent de préférence une largeur horizontale plus grande que leur hauteur verticale.

7. Système de retenue d'occupants de véhicule selon la revendication 6, **caractérisé en ce qu'**est disposé une grande partie des évents (18) au moins, entre le lieu d'impact avec le genou (40) d'un occupant de taille normale d'un véhicule, mais au-dessus du lieu d'impact avec le genou (42) d'un occupant de petite taille d'un véhicule.

8. Système de retenue d'occupants de véhicule selon la revendication 6 ou 7, **caractérisé en ce que** les évents (18) sont centrés verticalement et/ou que la largeur des évents (18) diminue avec une hauteur croissante.

9. Système de retenue d'occupants de véhicule selon l'une quelconque des revendications précédentes, **caractérisé en ce qu'**est prévu sur le côté extérieur de l'airbag de genou (10) un canal d'échappement des gaz sortant de l'airbag de genou (10) par les évents (18).

10. Système de retenue d'occupants de véhicule selon la revendication 9, **caractérisé en ce que** le canal d'échappement est formé par un couvercle (20), qui n'est pas entièrement fixé sur sa périphérie autour de l'évent (18) à l'enveloppe du coussin gonflable (12) et qui peut se renfler sous la pression du gaz s'échappant,

11. Système de retenue d'occupants de véhicule selon l'une des revendications 1 à 5 et la revendication 9 ou 10, **caractérisé en ce que** la longueur du canal d'échappement est au moins 1,5 fois le diamètre de l'évent (18), mesurée à partir de son centre.

12. Système de retenue d'occupants de véhicule selon l'une quelconque des revendications 9 à 11, **caractérisé en ce que** le canal d'échappement s'étend d'un côté, de préférence en direction d'une structure latérale du véhicule.

13. Système de retenue d'occupants de véhicule selon l'une quelconque des revendications 9 à 11, **caractérisé en ce que** le canal d'échappement s'étend sensiblement vers le haut.

14. Système de retenue d'occupants de véhicule selon l'une quelconque des revendications 9 à 11, **caractérisé en ce que** le canal d'échappement s'étend sensiblement vers le bas.

15. Système de retenue d'occupants de véhicule selon la revendication 10 et la revendication 14, **caractérisé en ce que** le couvercle (20) possède une extension (20a) centrale dirigée vers le bas qui n'est pas attachée à l'enveloppe de coussin à gaz (12).

16. Système de retenue d'occupants de véhicule selon la revendication 15, **caractérisé en ce que** l'évent (18) présente une ou plusieurs saillies (18b) s'étendant obliquement vers le bas.

17. Procédé de protection d'occupants d'un véhicule comprenant les étapes suivantes:
- Gonflage d'un airbag de genou (10) avec du gaz de sorte que l'airbag de genou (10) prend une position d'utilisation;
- Réglage de l'échappement des gaz en fonction de la constitution, en particulier de la taille de l'occupant du véhicule réalisé par un évent (18) dans une partie supérieure (36) de l'airbag de genou (10),
a) évent (18) qui est pressé par le déplacement vers l'avant du genou (38) d'un occupant de taille normale d'un véhicule contre un composant fixe (28) à l'intérieur du véhicule et est de ce fait fermé, ou
b) évent (18) qui n'est pas pressé par le déplacement vers l'avant du genou (38) d'un occupant de petite taille d'un véhicule contre un composant fixe (28) à l'intérieur du véhicule.
